# EUROPEAN PATENT APPLICATION

(11) **EP 4 760 090 A1**
(43) Date of publication of application: **17.06.2026**
(21) Application number: 25202034.2
(22) Date of filing: 13.09.2025
(51) Int. Cl.: F03D 1/06

(54) **MULTI-BLADE WIND TURBINE**

(30) Priority: 16.09.2024 RO 202400530
(71) Applicant: BMEnergy SRL, 400257 Cluj-Napoca (RO)
(72) Inventor: Breban, Stefan, 400257 Cluj-Napoca (RO); Pepelea, Dumitru, 077025 Bragadiru (RO)

(57) **Abstract**

The invention refers to a multi-blade wind turbine, used for conversion of wind energy into mechanical energy by means of a low-speed wind rotor, having good performance and being friendly to flying fauna, in particular birds and bats. The rotor of the multiblade turbine is equipped with several blades characterized by a torsion distributed linearly along its length and the effective angle of incidence between each blade and the wind direction is constant, which leads to a high turbine power coefficient (turbine rotor efficiency) at optimal tip speed ratio.

## Description

The invention refers to a multi-blade wind turbine, used for conversion of wind energy into mechanical energy by means of a low-speed wind rotor, having good performance and being friendly to flying fauna, in particular birds and bats. The wind turbine, consisting of blades and their fastening system, drives directly, or by intermediate of a gearbox, an electric generator that converts the mechanical power produced by the wind turbine into electrical power.

Several similar solutions are known, presented below. The document CA2487108C presents a multi-bladed wind turbine, with the blades fixed at both ends on a mechanical structure that allows them to tilt, with the outer ends, towards the front position of the turbine.

In the US7540705 document, a multi-blade wind turbine is presented, with a Savonius wind rotor, equipped with a mechanical structure that blocks the air currents for a part of the blades and another mechanical structure that can block air currents for the rest of the blades.

The US9194371 document reveals a wind turbine with several blades, mounted on a rotating hub. The patent presents, in addition to the technical details of the wind turbine, a series of comparative results between a standard three-blade turbine and the turbine covered by the patent.

The technical problem that the invention solves is the production of electricity using air currents (wind) that circulate in the vicinity of the ground, regardless of the direction of their movement.

The multi-blade wind turbine, according to the invention, solves the mentioned problem in that the blades of the wind turbine have a torsion distributed linearly along their length (wingspan), so that the effective angle of incidence between the blade and the direction of the local air current (wind) is constant, which leads to a high power coefficient (Cₚ) value (turbine rotor efficiency), when operating at nominal tip speed ratio (TSR). TSR is calculated as the blade's tip speed divided by the wind speed. The multi-blade rotor of the turbine can drive an electric generator, thus converting mechanical power into electrical power, or can drive a mechanical pump that can be used to transport liquids, for example to extract water from wells. The wind turbine should be mounted at the highest possible height, above the ground, using anchored or unanchored, tubular or lattice pillars, to benefit from the highest possible wind speeds.

The invention has several advantages, listed below. The first advantage is the very low operating noise, thanks to the low rotational speed of the multi-blade rotor. This is very important when planning to install wind turbines in residential areas. The second advantage is the reduced impact on flying fauna, such as birds and bats, which can see the turbine, in the case of birds, or locate it, in the case of bats, its appearance being solid, even in rotational motion. The third advantage also lies in the solid appearance of the multi-blade turbine, which eliminates the phenomenon of shadow flicker, which occurs when the sun is close to the horizon line and its light passes through the blades of standard turbines that rotate at low speed. This phenomenon can be very disturbing for residents in the vicinity of wind turbines. The fourth advantage is the possibility of manufacturing such wind turbines from recyclable materials, thus contributing to the circular economy.

Embodiments of the invention will now be described, by way of example only, with reference to the accompanying drawings in which:
- Figures 1a, 1b, 1c, 1d present the wind turbine with 24 blades, each blade having a torsion distributed linearly along its length and the angle of incidence between each blade and the wind direction is 15 degrees;
- Figures 2a, 2b, 2c - multi-blade wind turbine with blades manufactured from flexible thin sheets (plates), mounted on circular tubes (pipes) and with transversal symmetry (between edges);
- Figures 3a, 3b, 3c - multi-blade wind turbine with blades manufactured from flexible thin sheets (plates), mounted on circular tubes (pipes) and with transversal asymmetry (between edges);
- Figures 4a and 4b - multi-blade wind turbine with blades made of plastic, composite materials or wood;
- Figure 5 - Cₚ versus TSR for the multi-blade wind turbine shown in Fig. 1.

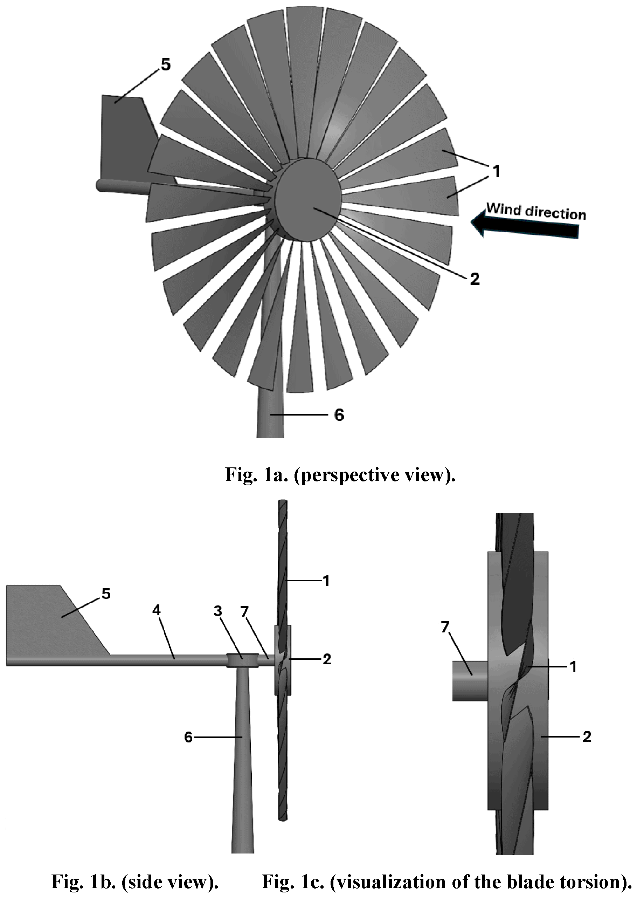

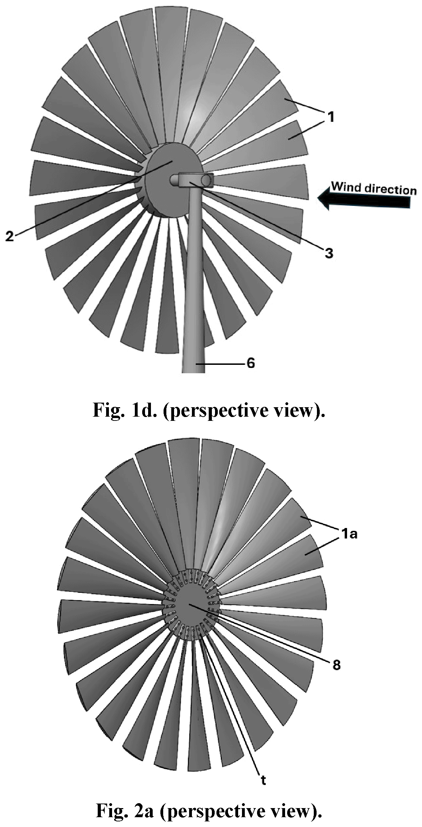

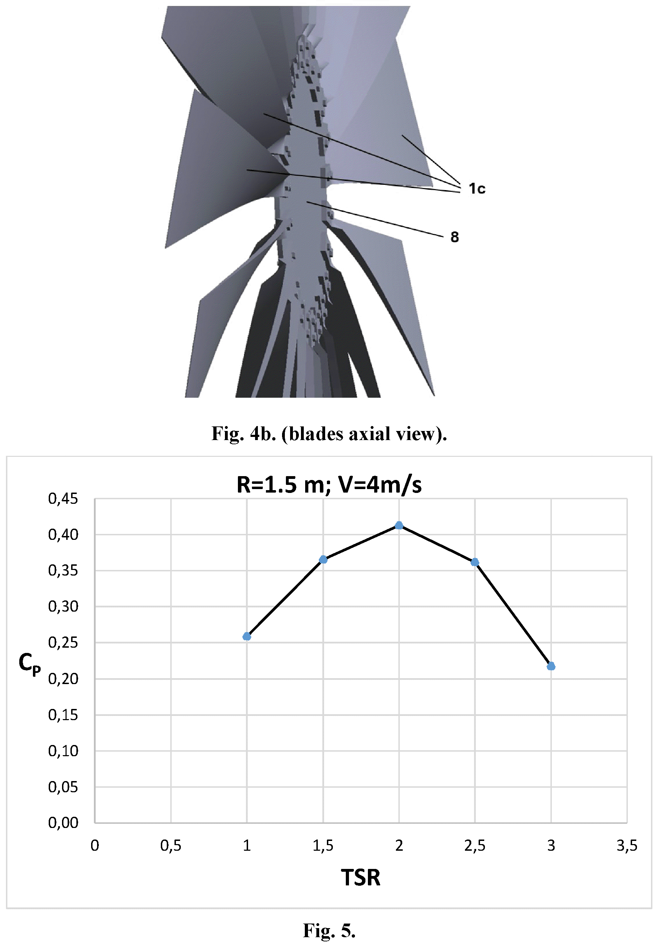

The multi-blade wind turbine is described below in a first embodiment (Fig. 1a, 1b, 1c, 1d). Fig. 1a and Fig. 1d show perspective views, Fig. 1b a side view and Fig. 1c a detail of blades **1** torsion. The turbine is equipped with 24 blades **1,** each blade having a torsion distributed linearly along its length and the angle of incidence between each blade and the wind direction is 15 degrees at TSR = 2. The blades are mounted on the circumference of an electric generator with external rotor **2,** the fixed shaft **7** of the electric generator **2** being attached to element **3** which allows the rotation of the turbine around pillar **6,** but also ensures the transfer of the generated electricity to the consumer or the storage system (not shown on figures), using slip rings. Tail **4** and guide vane **5** ensure the orientation of the wind turbine so that the moving air masses first meet the turbine blades **1** (Fig. 1 a,b,c), and afterwards the support pillar **6,** thus keeping the wind turbine blades into direct wind flow. Due to the topology of the blades **1,** the multi-blade turbine also works efficiently behind the pillar **6,** relative to the wind direction (Fig. 1d) without any structural modification at the turbine rotor. The simulations carried out to determine the Cp, for the wind turbine presented in Figs. 1a-1d, show that at a TSR = 2, the power coefficient has a maximum value of around 0.4 (Fig. 5). The simulations were carried out using a finite element method software, for a wind turbine with a radius of 1.5 meters, at a wind speed of 4 m/s. Due to the fact that the blades **1** are narrower in the mounting (inner) end, their strength is not sufficient considering the loads to which they are subjected, regardless of what material they are made of. Thus, Fig. 1a, 1b, 1c, 1d explain the basic principles of design for a specific multi-blade wind turbine. Next, the wind turbine rotor manufacturing solutions with industrial applicability are presented, without repeating the other construction elements of the wind turbine.

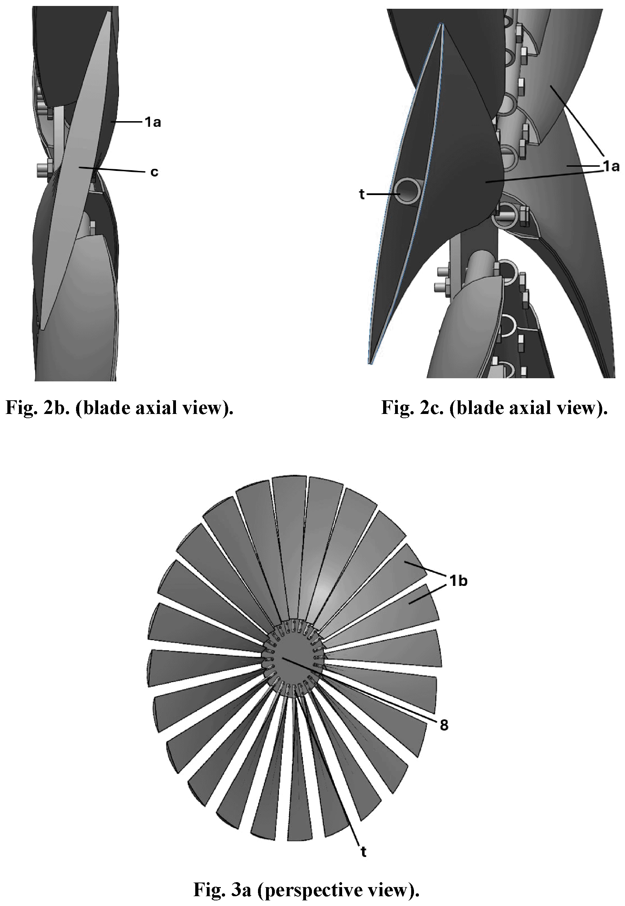

The multi-blade wind turbine, in a preferred embodiment, is shown in Fig. 2a, 2b, 2c. The blades **1a** are made of flexible thin sheets of material (steel, aluminum, carbon fiber, plastic, etc.) mounted on circular tubes **t,** made of a material (steel, aluminum, carbon fiber, etc.), which ensures structural resistance. Blades **1a** are fixed to a support **8,** which can be mounted on the shaft of an electric generator with an inner rotor, or on the housing of an electric generator with an external rotor (not shown on figures). Each blade **1a** can be made of a single flexible sheet of material bent at one edge and joined at the other edge, or from two flexible sheets of material joined at both edges. Edge joining can be achieved by welding, riveting, gluing, or another suitable joining process. Fixing the flexible thin sheets to the circular tubes **t,** can be done by welding, riveting, gluing, or other suitable fixing process. Blades **1a**, shown in Fig. 2a, 2b, 2c have transversal symmetry (between edges) along the torsional reference plane axis. Blades **1a** keep an effective angle of incidence between each blade and the wind direction at 15 degrees for a TSR = 2. At the outer end of the blades **1a**, a cover c can be fitted, which covers the blade opening and provides better aerodynamic performance for the multi-blade wind turbine. Such a cover can also be used at the mounting (inner) end of the blades **1a**, around the circular tubes **t** (not shown on figures). The fixing of the blades **1a** to the support **8** is preferably done with screws and nuts, for easy assembly and disassembly. The simulations results have shown that for this embodiment of multi-blade wind turbine, the Cp is about 0.37 at TSR = 2.

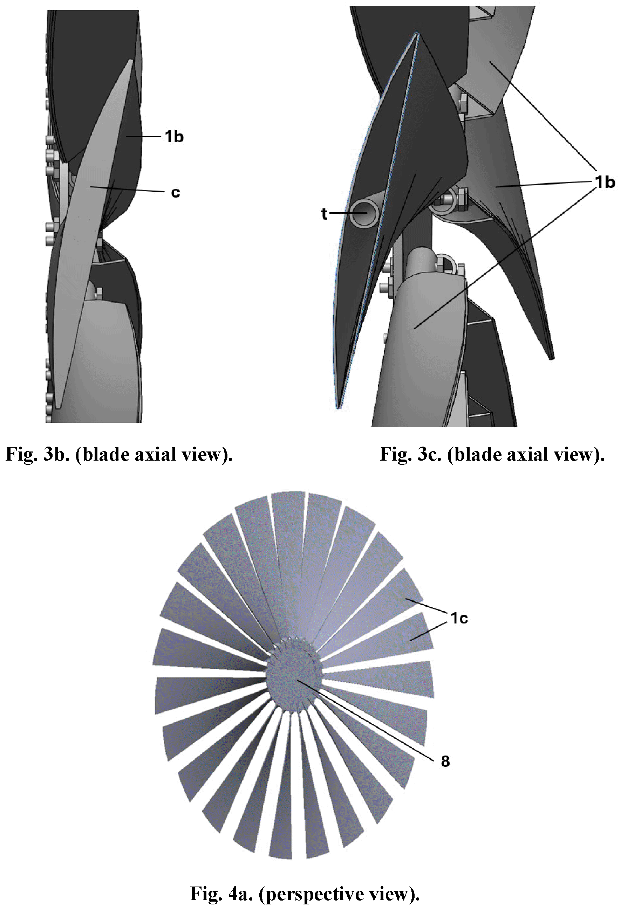

The multi-blade wind turbine, in another embodiment, is shown in Fig. 3a, 3b, 3c. The only difference, compared to the embodiment shown in Fig. 2a, 2b, 2c, is that the blades **1b** have transverse asymmetry (between the edges) along their torsional reference plane axis. The rest of the characteristics are preserved. The simulations show very similar results compared with the preferred embodiment (Fig. 2a, 2b, 2c), the Cp in this case is about 0.375 at TSR = 2.

The multi-blade wind turbine, in another embodiment, is shown in Fig. 4a and 4b. Blades **1c** have a greater thickness at the mounting (inner) end to increase their resistance to wind loads. Thus, the thickness of the blades **1c** decreases from the inner end to the outer end. The manufacturing of such blades requires higher initial costs, due to the need to use mold, except those made of wood. Thus, blades **1c** can be made of plastic injected into molds, or they can be made of composite materials (fiberglass, carbon fiber, or other variants) using two semi-molds. Also, the blades **1c** can be manufactured from laminated wood or raw wood, in both cases a milling operation of the blade hub is also necessary. For all cases, the blades **1c** are fixed to support **8,** preferably, with screws and nuts, for easy mounting and disassembly.

The multi-blade wind turbines described above have 24 blades but can be designed with a smaller or larger number of blades. Also, the optimal angle of incidence between each blade and the wind direction can be changed depending on the number of blades and the desired TSR operation value.

## Claims

1. Multi-blade wind turbine, having at least 4 blades, **characterized in that** the blades of the wind turbine have a torsion distributed linearly along their length (span), such that the effective angle of incidence between each blade and the wind direction is constant.

2. Multi-blade wind turbine, as in Claim 1, **characterized in that** it is equipped with 24 blades and the effective angle of incidence between each blade and the wind direction is 15 degrees.

3. Multi-blade wind turbine, as in Claims 1 or 2, **characterized in that** the blades of the turbine are made of thin sheets (plates) of flexible material (steel, aluminium, carbon fibre, plastic, etc.), mounted on circular tubes made of a material (steel, aluminium, carbon fibre, etc.), which ensure their structural resistance. Each blade may be made from a single sheet (plate) of material bent at one edge and joined at the other edge, or from two sheets (plates) of material joined at both edges. The joining at the edges may be achieved by welding, riveting, gluing, or other suitable joining process. The fixing of the sheets (plates) of material to the circular tubes may be achieved by welding, riveting, gluing, or other suitable fixing process.

4. Multi-blade wind turbine, as in Claim 3, **characterised in that** the blades have transverse symmetry (between edges) along the torsion plane.

5. Multi-blade wind turbine, as in Claim 3, **characterised in that** the blades have transverse asymmetry (between edges) along the torsion plane.

6. Multi-blade wind turbine, as in Claims 1 or 2, **characterized in that** the turbine blades have a greater thickness at the fixing end on their mounting support, to increase their resistance at operating loads.

7. Multi-blade wind turbine, as in Claim 6, **characterized in that** the blades are made of plastic, or composite materials, or wood.
